(19) **Europäisches Patentamt**
**European Patent Office**
**Office européen des brevets**

(11) Publication number: **0 199 201 B1**

(12) **EUROPEAN PATENT SPECIFICATION**

(45) Date of publication of patent specification: **31.07.91**

(51) Int. Cl.⁵: **G06K 1/12**, G06K 7/10, G06K 15/00, G06K 3/02, G06F 3/00

(21) Application number: **86104939.3**

(22) Date of filing: **10.04.86**

(54) **Thermal label printer.**

(30) Priority: **26.04.85 JP 89001/85**
**26.04.85 JP 89002/85**
**26.04.85 JP 89003/85**

(43) Date of publication of application:
**29.10.86 Bulletin 86/44**

(45) Publication of the grant of the patent:
**31.07.91 Bulletin 91/31**

(84) Designated Contracting States:
**DE FR GB**

(56) References cited:
**EP-A- 0 126 898**
**GB-A- 2 138 190**

(73) Proprietor: **Kabushiki Kaisha Sato**
**15-5, 1-chome, Shibuya**
**Shibuya-ku Tokyo(JP)**

(72) Inventor: **Sato, Yo**
**21-23, 3-chome Kamikitazawa Setagaya-ku Tokyo(JP)**
Inventor: **Kashiwaba, Tadao**
**17-20, 1-chome Uenomachi Kitakami-shi Iwate-ken(JP)**

(74) Representative: **Patentanwälte Grünecker, Kinkeldey, Stockmair & Partner**
**Maximilianstrasse 58**
**W-8000 München 22(DE)**

## Description

The invention relates to a thermal label printer according to the preamble part of the main Claim 1.

Such a label printer is known from EP-A2-0 126 898. This reference discloses a hand-labeller having a housing including a movable housing section being provided with a keyboard and a visual display. The movable section can be latched in a closed position by means of latch teeth which cooperate with a manually movable latch.

However, the latches are movable to release the movable section so that the movable section can be pivoted to an open position, which is shown in Figure 2 of EP-A2-0 126 898.

Thus, although the known hand-held labeller comprises a movable housing section, said housing section cannot be annularly adjusted for changes in the mode of manual operation, e.g. between a mode for the data input through the keyboard and a mode for label application to merchandise and other objects, as is required in applications in which the thermal label printer is used both as a desk-top device in an office and as a portable device to be taken out of the office into the warehouse or out in the field. As a result, the known hand-held labeller is often inconvenient for the operator to use.

Accordingly, it is an object underlying the present invention to provide a thermal label printer according to the preamble part of the main claim which is well adapted for use in applications wherein data input and label printing are carried out at different locations or wherein labels of different size are to be printed.

The solution of this object is achieved by the features of the claim.

The thermal label printer according to the present invention is thus able not only to receive and output data but also to print labels. As a result, by printing required date on labels it becomes possible to indicate the data on articles of merchandise and the like or on files therefore, to display the data at a later time, and to use the data for data administration at a later time. Moreover, in cases where the data input and data output operations are carried out at different places, the efficiency of the data input operation can be improved by disconnecting the terminal unit from the printer unit. Also, by providing a plurality of printer units each adapted for printing labels of a different size, it becomes possible to print labels of the desired size simply by selecting the appropriate one of the printer units and connecting it with the terminal unit. In addition, the capability of the thermal label printer can easily be expanded further by the additional provision of function keys for entering commands for different data input and output modes.

As the angular relation between the terminal unit and the printer unit can be adjusted, the angle of the inclination of the thermal label printer according to thin invention can be varied to obtain optimum operability and utility when it is used as a desk-top device as well as it is used as a portable device. In addition, the capability of the thermal label printer can easily be expanded further by the additional provision of function keys for entering commands for different data input and output modes.

The thermal label printer unit according to this invention can thus be connected with a desired data collector or data terminal whenever the necessity arises. As a result, by printing required data on labels it becomes possible to indicate the data on articles of merchandise and the like or on files therefor, to display the data at a later time, and to use the data for data adminstration at a later time. The thermal label printer unit according to this invention therefore enables full utilization of the capabilities of the data terminal or the like with which it is connected and in this way expands the range of utility thereof.

Hereinafter, preferred embodiments of the present invention will be described in more detail with reference to the attached drawings, wherein:

Figure 1 is a perspective view of an embodiment of the thermal label printer according to this invention,

Figure 2 is a sectional side view of the same embodiment showing its internal structure,

Figure 3 is a perspective view of a segment of a label strip,

Figure 4 is a perspective view showing how the thermal label printer according to this invention is connected with a microcomputer,

Figure 5 is a perspective view showing how the thermal label printer according to thid invention is connected with a host computer,

Figure 6 is a perspective view of a thermal label printer according to this invention with its data terminal unit separated from its label printer unit, and

Figure 7 is a perspective view of the thermal label printer shown in Figure 1 with the data terminal unit and the label printer unit connected at a different angle.

## DESCRIPTION OF THE PREFERRED EMBODIMENT

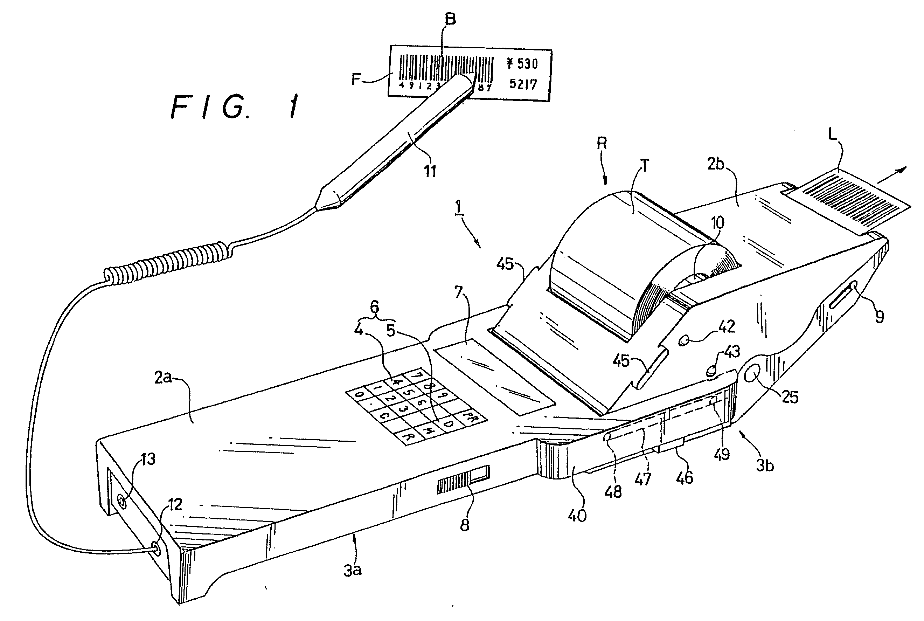

Referring to Figure 1, the thermal label printer 1 according to this invention consists of a data terminal unit 2a and a label printer unit 2b which combine to form a main unit of desk-top type. The units 2a and 2b have respective flat bottom surfaces 3a and 3b which can be used for supporting the thermal label printer on any desired flat surface.

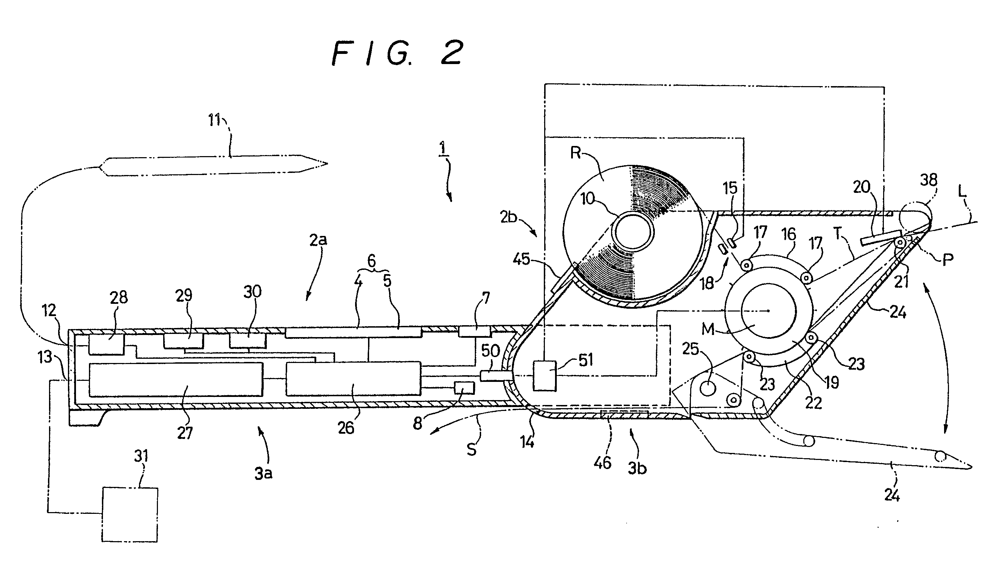

The data terminal unit 2a is provided on its top side with a keyboard 6 consisting of a numeric pad 4 and a number of function keys 5, and at a position above the keyboard 6 with a data display 7 which may, for example, be a liquid crystal display. One side surface of the data terminal unit 2a is provided with a power switch P. The printer unit 2b is provided on either side with an open/close button 9 (only one shown) and on its top side with a support member 10 for holding a thermal label roll R consisting of a thermal label strip T wound into a roll. The thermal label strip T comprises a backing sheet S (Figure 2) bearing numerous labels L which after being printed and detached from the backing sheet S are discharged from the front end of the thermal label printer as indicated by the arrow.

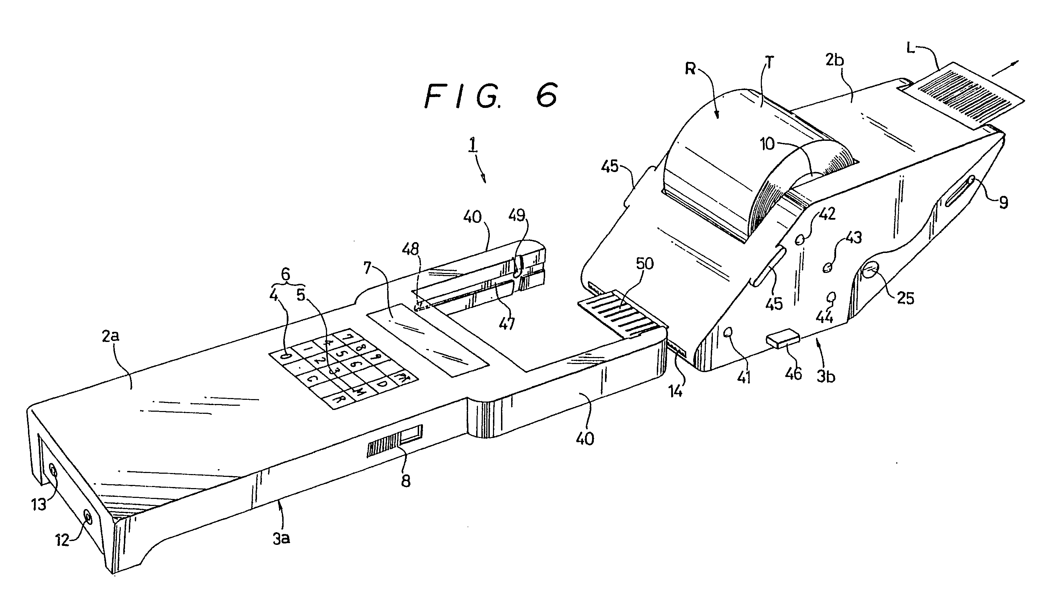

At the rear end of the terminal unit 2a are provided a socket 12 for connecting a pen scanner 11 and a socket 13 for connecting a battery charger 31 to an internal battery 27 (Figure 2) whose function will be described later. The reference numeral 14 appearing in Figure 2 and Figure 6 denotes a discharge outlet for the backing sheet S which is formed at the rear end of the printer unit 2b near the bottom thereof.

Returning to Figure 1, the pen scanner 11 is passed over a bar code B printed on a shelf tag F and representing a merchandise code or the like, and the data read in this way is input to the thermal label printer 1.

As best shown in Figure 6, the terminal unit 2a and the printer unit 2b are constituted as separate units which can be united with each other by clamping the printer unit 2b within a yoke 40 provided on the forward end of the terminal unit 2a. The two units 2a and 2b can be connected and disconnected as desired.

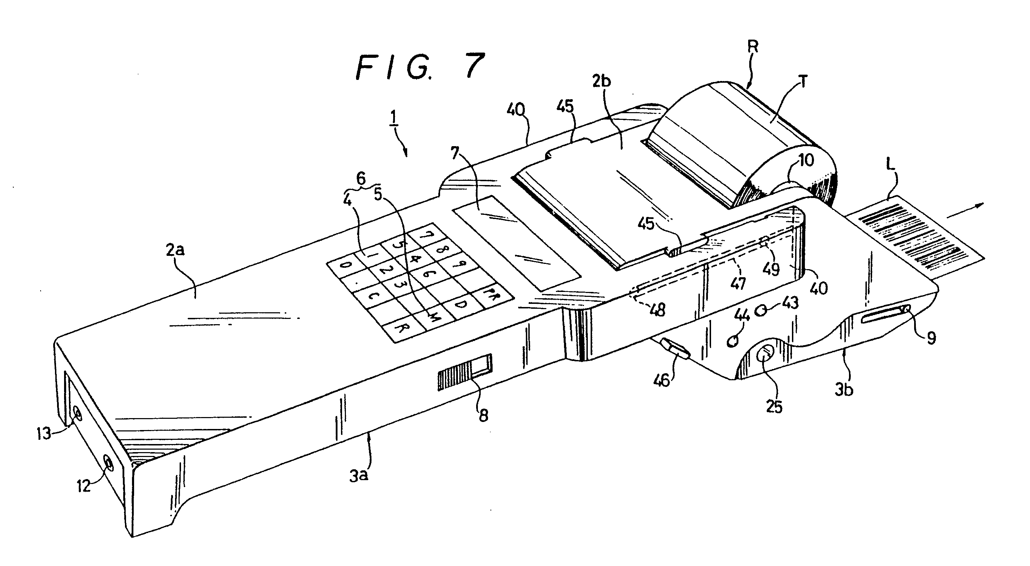

The manner of connection between the two units will now be described in more detail. The unit 2b has a pair of steel balls 41 (only one shown) countersunk one each at symmetrical positions in its left and rigth side surfaces, similarily provided paired steel balls 42,43 and 44 (only one of each pair shown) for fixing the angular position between the unit 2a and the unit 2b, a pair of upper position stops 45 and a pair of lower position stops 46 (only one shown). The steel balls 41, 42, 43 and 44 are outwardly urged by associated springs (not shown) so as to normally protrude above the side surface of the unit 2b but to recede under externally applied pressure to a position flush with the side surface. The yoke 40 has a guide groove 47 running along the inside surface of either side thereof and each of the guide grooves 47 is provided with a pivot hole 48 near the inward end thereof and with an angular position fixing hole 49 near the outward end thereof. When the units are connected, the steel balls 41 pass along the grooves 47 until coming into snap engagment with the pivot holes 48, at which time one of the pairs of steel balls 42, 43, 44 makes snap engagment with the angular position fixing holes 49. Figure 1 shows the case where the angular relation between the units 2a and 2b is such that the yoke 40 is an abutment with the lower position stops 46 and the steel balls 44 are engaged in the angular position fixing holes 49, while Figure 7 shows the case where the angular relation between the units 2a and 2b is such that the yoke 40 is in abutment with the upper position stops 45 and the steel balls 42 are engaged in the angular position fixing holes 49. Reference numeral 50 denotes a connector for electrical connection between the units 2a and 2b.

It should be understood that the mechanism for mechanically connecting the units 2a and 2b in such manner that they can be connected and disconnected as desired and when connected can be varied in angular relation can alternatively be constituted in various other ways than that illustrated, using, for example, screws, cams, leaf springs, linkages and the like.

For example, the two units 2a and 2b may be connected by replacing the steel balls 41 and the pivot holes 48 with pivot bosses and tapped holes (neither shown), respectively, and using bolts to fix the two units together. In other words, any type of connection may be used insofar as it makes it possible for the unit 2b to be freely connected with and disconnected from a data terminal.

Moreover, it is not a requirement of the invention that the two units be capable of disconnection, i.e. they may be made integral. For example, the two units 2a and 2b may be connected by replacing the steel balls 41 and the pivot holes 48 with pivot bosses and tapped holes (neither shoen), respectively, and using bolts to fix the two units together. In other words, it makes no difference whether the units 2a and 2b are attached to each other separably or inseparably and the only requirement is that they be fixed so as to permit adjustment of the angular relation therebetween.

The internal structure of the thermal printer 1 will now be described with reference to Figure 2. The thermal label strip T is drawn off the thermal label roll supported on the support member 10 of the label printer unit 2b and passed along a label strip passage 18 that takes it through a position sensor 15 and along guide rollers 17 of an upper press member 16.

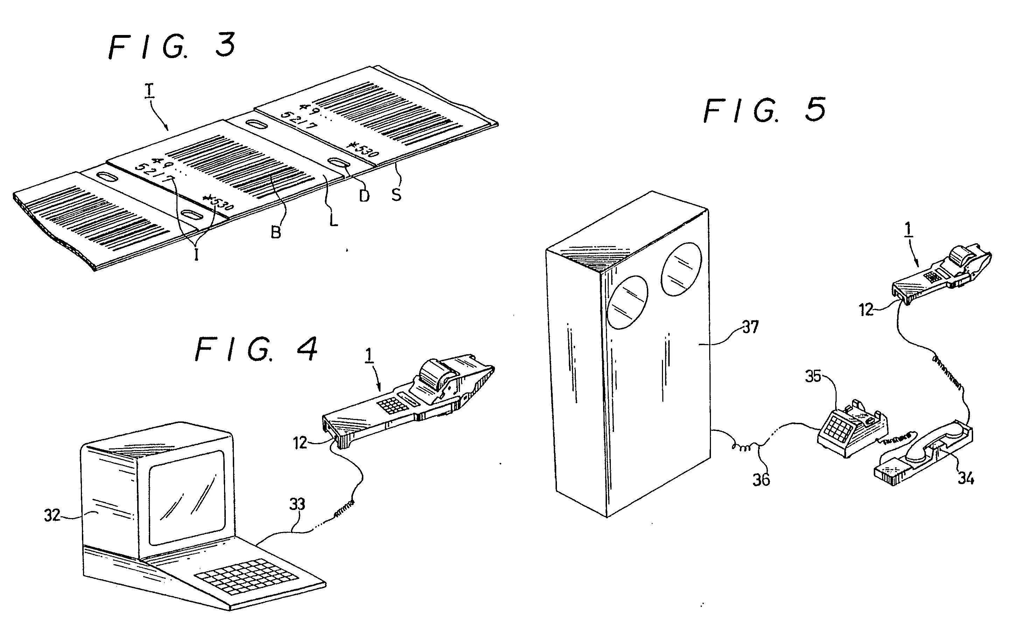

As shown in Figure 3, the thermal label strip T consists of a continuous series of labels L detachably adhered to a continuous backing sheet S.

The labels L have adhesive applied to their rear surfaces while the backing sheet S is coated with a parting agent to facilitate separation of the labels L therefrom. The labels L are intended to be printed with information I which may include a bar code B representing a merchandise code or a manufacturer code, a division code and a price. The backing sheet S has holes D for position detection as well as for engagement with the conveyor roller 19 shown in Figure 2.

Reverting to Figure 2, the thermal label strip T passes via the conveyor roller 19 to a thermal print head 20 and a platen 21, is redirected at the platen 21 portion, where the labels L are peeled off, so that just the backing strip is directed back to engagment with the conveyor roller 19, guided by guide roller 23 of a lower press member 22, and the backing sheet S then feeds out from the unit 2b via the discharge outlet 14. A sheet bending pin P (shown by a phantom line) can be provided in front of the platen 21 as the label peeling means for peeling the labels L from the backing sheet S as the backing sheet S is redirected.

The loading of the label strip T is accomplished by working the open(close buttons 9 to allow the bottom cover 24 section which includes the platen 21 and the lower press member 22, to swing downwardly about pivots 25 (i.e. to the position shown in phantom lines in Figure 1), thereby making it possible to insert the roll of thermal label strip T. Any conventional type of opening/closing mechanism may be used for this purpose, so details thereof are herein omitted. The conveyor roller 19 is driven by the stepped rotation action of a stepping motor M so as to move the thermal label strip T in the required direction for printing and conveyance.

The terminal unit 2a houses a control circuit 26. This control circuit 26 is connected to a battery 27, an interface 28 for data input from and output to external devices, a ROM program memory 29 for communication and control programs, a RAM memory 30, and a keyboard 6. The display 7, sensor 15, thermal print head 20 and stepping motor M are also connected to the control circuit 26 via the connector 50 and are thereby controlled by the control circuit 26. The battery 27 is a rechargeable type and can be connected via the socket 13 to an external battery charger 31.

Figure 4 shows the thermal label printer 1 connected to a microcomputer 32 to allow data I/O operations therebetween. Data can be transferred to the microcomputer 32 via the socket 12 and a cable 33. Figure 5 shows an acoustic coupler 34 being used to link the printer 1 to a large host computer 37 via a telephone 35, by means of a wired or wireless link 36.

The operation of the present invention will now be exlained with reference to an application for replenishing stock at a supermarket or the like.

The operator carries the thermal label printer 1 and the pen scanner 11 to a merchandise display shelf or rack where he scans a shelf tag F, thus inputting the merchandise code and other pertinent date to the thermal label printer 1. Next he operates the keys of the numeric pad 4 to input the quantity of merchandise to be ordered to bring the stock up to the desired level. At this time the input data is displayed on the display 7 so that the operator is able to confirm its accuracy. The operator then moves to succeeding shelves or racks and repeats the same operations. In the course of this work the operator may or may not want to print labels with the input data immediately after the data is input. If there is no need to print labels immediately, the operator can detach the printer unit 2b and carry only the terminal unit 2a. This will reduce the weight of the equipment he has to carry and relieve him of a considerable amount of labor in cases where he is required to continue his work for a relatively long time.

The input data is temporarily stored in the data memory 30 and then, after the work of inputting order data for stock replenishment has been completed, is transmitted out of the thermal label printer 1 to a microcomputer 32 or a host computer 37 via the interface 28 and the socket 12, as shown in Figures 4 and 5.

As the transmission of the data from the thermal label printer 1 to the microcomputer 32 or the host computer 37 does not erase it from the data memory 30, it is then possible for the operator to go to the freight receiving area, either immediately or after the ordered merchandise has arrived, and print out the required labels (after reconnecting the terminal unit 2a with the printer unit 20, of course, if the two units have been disconnected). For the printing of labels in this way, the operator need only press the function key 5 marked PR. This will cause the conveyor 19 to advance the thermal label strip T and activate the thermal head 20, causing it to print the labels L with bar codes B add other information I corresponding to the merchandise codes, order quantity data and the like stored in the memory means 30. Moreover, as only the backing sheet S is redirected at the platen 21, the labels L are peeled off the backing sheet S and ejected from unit 2b. As each label is ejected, the operator can pick it up and affix it to the appropriate item of merchandise (not shown).

Thus the labels can be printed merely by pressing the PR function key, without the troublesome work of manually inputting the merchandise code and quantity data that has conventionally been required. Where the number of labels to be applied to merchandise is large, it will be convenient to provide an application roller 38 forward of the platen 21 as shown by a phantom line in Figure 2. In this case, the work of applying the labels can be carried out with high efficiency by adjusting the angular relation between the units 2a and 2b to that shown in Figure 7 and using the unit 2a portion as a handle.

The structure of the thermal label printer according to this invention can be simplified, if desired, by omitting the keyboard and providing only the pen scanner or a touch scanner as the data input means and further optionally omitting the display as well. In this case, it is advantageous to provide another socket for input, in addition to the socket 12 already described. Also, in a case where the thermal label printer according to this invention is desired to be made easily portable, a handle (not shown) can be provided on the bottom of one of the two units 2a and 2b. The handle can be of either fixed or detachable type.

Although the invention has been described with respect to an application for ordering merchandise to replenish stock at a supermarket or the like, the invention is not limited to such an application but can also be used for inputting and outputting data regarding various types of merchandise and other articles using a pen scanner, keyboard or any of various other kinds of data I/O means, for transferring this data to a central computer, for receiving data from the central computer, and for printing labels using the data input thereto from the data input means or the central computer. As a result the thermal label printer according to this invention is able to print labels based on various data from various sources, and is therefore applicable to a wide range of jobs, many of which could not be handled by conventional label printers.

A short list of possible applications for the present thermal label printer would include, for example, stock administration at retail shops, office data file administration, printing of blood data cards and test tube labels at blood banks, printing of bar code labels for patient charts and medical certificates at medical clinics and hospitals, administration of manufacturing processes, parts and inventory at factories, printing of labels for confirmation of when freight is received and shipped at freight depots, administration of data and printing of labels relating to outside suppliers at department stores and supermarkets, and administration of customer data at department stores and supermarkets.

## Claims

1. A thermal label printer (1) comprising:

a label printer unit (2b) having a passage (18) for passing a label strip (T) consisting of thermosensitive labels (L) detachably attached to a backing sheet (S),

a supporting member (10) for supporting a roll (R) of label strip,

a thermal label position detecting means (15),

a thermal label strip conveyance means (19, M),

a thermal printing means (20, 21) for thermally printing characters on the thermosensitive labels conveyed by the conveyance means (19, M), and

a label peeling means (P) for peeling the labels (L) from the backing paper sheet (S);

a data terminal unit (2a) having a data memory means (30),

a program memory means (29),

an input/output means (6, 7) for data exchange with exterior devices, and

a control means (26) for controlling the aforesaid means (30; 29; 6, 7); and

means (40 to 50) for electrically and mechanically connecting the label printer unit (2b) and the data terminal unit (2a), being CHARACTERIZED IN

that said means (40 to 50) are adapted to adjust the angular relation between the label printer unit (2b) and the data terminal unit (2a) in two working positions.

## Revendications

1. Imprimeur thermique (1) d'étiquettes, comprenant : une imprimante (2b) d'étiquettes, munie d'un passage (18) pour le défilement d'un ruban d'étiquetage (T) constitué d'étiquettes thermosensibles (L) fixées, de manière détachable, à une feuille substrat (S), un élément de support (10) pour supporter un rouleau (R) de ruban d'étiquetage, un moyen (15) détecteur de positions de l'étiquetage thermique, un moyen (19, M) de convoyage du ruban d'étiquetage thermique, un moyen d'impression thermique (20, 21) pour imprimer thermiquement des caractères sur les étiquettes thermosensibles convoyées par le moyen de convoyage (19, M), et un moyen (P) de dissociation des étiquettes, pour détacher les étiquettes (L) de la feuille substrat en papier (S) ;

un terminal de données (2a), muni d'un moyen (30) de mémorisation de données,

un moyen (29) de mémorisation programmée, un moyen d'entrée/sortie (6, 7), en vue d'un échange de données avec des dispositifs extérieurs, et

un moyen de commande (26) pour commander les moyens précités (30 ; 29 ; 6, 7) ; et des moyens (40 à 50) pour relier électriquement et mécaniquement l'imprimante (2b) d'étiquettes et le terminal de données (2a), CARACTERISE PAR LE FAIT

que lesdits moyens (40 à 50) sont conçus pour ajuster la relation angulaire entre l'imprimante (2b) d'étiquettes et le terminal de données (2a) dans deux positions de travail.

**Patentansprüche**

1. Thermo-Etikettendrucker (1), mit:

   einer Etikettendruckereinheit (2b), die einen Durchgang (18) zum Passieren eines Etikettenstreifens (T) aufweist, der aus thermoempfindlichen Etiketten (L) besteht, die lösbar mit einer Rückfolie (S) verbunden sind,

   einem Lagerungsteil (10) zum Lagern einer Rolle (R) des Etikettenstreifens,

   einer Thermo-Etikettenpositionserfassungseinrichtung (15),

   einer Thermo-Etikettenstreifen-Fördereinrichtung (19, M),

   einer Thermo-Druckeinrichtung (20, 21) zum thermischen Drucken von Zeichen auf die thermoempfindlichen Etiketten, die durch die Fördereinrichtung (19, M) gefördert werden, und

   einer Etiketten-Abschäleinrichtung (P) zum Abschälen der Etiketten (L) von der Rückpapierfolie (S);

   einer Datenanschlußeinheit (2a), die eine Datensichereinrichtung (30) aufweist,

   einer Programmspeichereinrichtung (29),

   einer Eingabe/Ausgabe-Einrichtung (6, 7) zum Datenaustausch mit äußeren Vorrichtungen, und

   einer Steuereinrichtung (26) zur Steuerung der vorerwähnten Einrichtungen (30; 29; 6, 7); und

Mitteln (40 bis 50) zum elektrischen und mechanische Verbinden der Etikettendruckereinheit (2b) und der Datenanschlußeinheit (2a),

**dadurch gekennzeichnet,**

daß die Mittel (40 bis 50) angepaßt sind, die Winkellage zwischen der Thermodruckereinheit (2b) und der Datenanschlußeinheit (2a) in zwei Arbeitspositionen einzustellen.

FIG. 1

FIG. 2

EP 0 199 201 B1

FIG. 3

FIG. 4

FIG. 5

EP 0 199 201 B1

FIG. 6

EP 0 199 201 B1

FIG. 7

EP 0 199 201 B1